# EUROPÄISCHE PATENTSCHRIFT

(11) **EP 0 978 679 B1**
(45) Veröffentlichungstag und Bekanntmachung des Hinweises auf die Patenterteilung: **24.05.2006**
(21) Anmeldenummer: 99112876.0
(22) Anmeldetag: 03.07.1999
(51) Int. Cl.: F16L 33/18

(54) **Anschlussvorrichtung für Fluidleitungen**
Connecting device for fluid conduits
Dispositif de connexion pour des conduits de fluide

(30) Priorität: 01.08.1998 DE 29813761 U
(43) Veröffentlichungstag der Anmeldung: 09.02.2000
(73) Patentinhaber: FESTO AG & Co, 73734 Esslingen (DE)
(72) Erfinder: Schulz, Winfried, 73765 Neuhausen (DE)
(74) Vertreter: Abel, Martin

(56) Entgegenhaltungen:
- EP-B- 0 247 214
- GB-A- 855 836
- US-A- 5 205 568

## Beschreibung

Die Erfindung betrifft eine Anschlussvorrichtung für Fluidleitungen, mit einem einen Strömungskanal aufweisenden Grundkörper, mit dem durch einen Steckvorgang eine Fluidleitung verbindbar ist und der eine koaxial zu dem Strömungskanal angeordnete ringförmige Dichtung trägt, die mit einer ringförmigen Dichtlippe am Außenumfang der angesteckten Fluidleitung anliegen kann, um einem Eindringen von Verunreinigungen in zwischen der Fluidleitung und dem Grundkörper vorhandenen Zwischenräumen entgegenzuwirken.

Eine Anschlussvorrichtung dieser Art geht aus der EP-B-0 247 214 hervor. Diese verfügt über einen Grundkörper, der an einem mit Fluid zu versorgenden Bauteil festlegbar ist und an den sich eine flexible Fluidleitung anstecken lässt, durch die hindurch das Fluid zugeführt wird. Um zu vermeiden, dass Verunreinigungen in die zwischen dem Grundkörper und dem Außenumfang der Fluidleitung vorhandenen Zwischenräume eintritt, was eine beim Einsatz im Lebensmittelsektor nicht tolerierbare Bakterienbildung fördern könnte, ist im Bereich der Einstecköffnung des Grundkörpers eine ringförmige Dichtung festgelegt, die mit einer Dichtlippe am Außenumfang der Fluidleitung anliegt.

Als nachteilig bei der bekannten Anschlussvorrichtung wird empfunden, dass das Anstecken der Fluidleitung durch die notwendigerweise einen annähernd dem Außenquerschnitt entsprechenden Querschnitt umschließende Dichtlippe der ringförmigen Dichtung erschwert wird. Zudem neigt die Dichtlippe dazu, beim Hindurchführen der Fluidleitung nach axial hinten umzuklappen, so dass sich neuerlich ein spaltartiger Zwischenraum einstellt, in dem sich Verschmutzungen ablagern können.

Die US-A-5 205 568 offenbart eine Anschlussvorrichtung für Fluidleitungen mit einem in einer Ausnehmung der Anschlussvorrichtung angeordneten Dichtungsring. Der Dichtungsring besitzt eine Überdruck-Dichtlippe, die von der im Einstecken befindlichen Fluidleitung axial beaufschlagt und radial aufgeweitet wird, so dass sie bei fertig angesteckter Fluidleitung an deren Außenumfang anliegt. Ein zusätzlicher Unterdruck-Dichtungsabschnitt ist als Bestandteil eines Schwenkringes ausgebildet, der über eine flexible Zone relativ zu einem die Überdruck-Dichtlippe tragenden Mittelabschnitt verschwenkbar aufgehängt ist. Er wird bei in der Fluidleitung herrschendem Unterdruck gegen den Außenumfang der Fluidleitung angedrückt.

Es ist die Aufgabe der vorliegenden Erfindung, eine Anschlussvorrichtung der eingangs genannten Art zu schaffen, die bei einfacher Handhabung und ungeachtet toleranzbedingter Durchmesserabweichungen anzuschließender Fluidleitungen eine zuverlässige und möglichst spaltfreie Abdichtung zwischen dem Grundkörper und der angesteckten Fluidleitung gewährleistet.

Zur Lösung dieser Aufgabe ist vorgesehen, dass die Dichtung eine radial nach innen in den Ansteckweg der anzuschließenden Fluidleitung ragende, eine ringförmige Konfiguration aufweisende Betätigungspartie besitzt, die beim Anstecken einer Fluidleitung durch deren Stirnfläche beaufschlagbar und axial verlagerbar ist, wobei sie ein Verschwenken der Dichtlippe aus einer einen größeren Querschnitt umgrenzenden Ausgangsstellung in eine unter Umgrenzung eines geringeren Querschnitts am Außenumfang der Fluidleitung anliegende Dichtstellung hervorruft, und die auch bei fertig angesteckter Fluidleitung deren Stirnfläche axial vorgelagert ist.

Ist keine Fluidleitung an den Grundkörper angesteckt, nimmt die Dichtlippe der ringförmigen Dichtung üblicherweise eine Ausgangsstellung ein, in der sie einen ausreichend großen Querschnitt umgrenzt, der ein Hindurchführen einer Fluidleitung gänzlich ohne oder mit nur geringer Berührung gestattet. Dadurch wird gewährleistet, dass die Dichtlippe beim Anstecken der Fluidleitung nicht umgestülpt wird. Stößt die Fluidleitung mit ihrer Stirnseite an der Betätigungspartie der Dichtung an, kann durch etwas verstärkten Druck ein axiales Verlagern der Betätigungspartie hervorgerufen werden, was gleichzeitig zur Folge hat, dass die Dichtlippe entlang ihres gesamten Umfanges radial nach innen verschwenkt wird, bis sie am Außenumfang der Fluidleitung anliegt und ihre Dichtstellung eingenommen hat. Das Verschwenken der Dichtlippe aus der Ausgangsstellung in die Dichtstellung wird also durch die mit der Dichtlippe verbundene Betätigungspartie bewirkt, die beim Anstecken einer Fluidleitung automatisch betätigt wird. Dabei lässt sich durch Vorgabe einer ausreichenden Differenz zwischen den von der Dichtlippe in den beiden Stellungen umgrenzten Querschnitten ein weiter Durchmesserbereich von Fluidleitungen erfassen, in dem ohne Beeinträchtigung der Handhabbarkeit ein zuverlässiger und möglichst spaltfreier Dichtkontakt erzielt werden kann. Bei entsprechender Ausgestaltung läßt sich die Dichtung bei praktisch allen Typen von Anschlußvorrichtungen verwenden und auch unabhängig davon, ob die anzuschließende Fluidleitung eingesteckt oder aufgesteckt wird. Dabei ist ein Einsatz insbesondere auch dann möglich, wenn eine Fluidleitung auf einen umfangsseitig freiliegenden Anschlußstutzen aufzustecken ist und es darum geht, den axialen Zwischenraum zwischen der Fluidleitung und einer vorgelagerten Wand des Grundkörpers abzudecken. Hier arbeitet die Anschlußvorrichtung auch dann sehr zuverlässig, wenn die Stirnfläche der Fluidleitung auf Grund eines unsauberen Schnittes schräg verläuft.

Vorteilhafte Weiterbildungen der Erfindung gehen aus den Unteransprüchen hervor.

Bei einer besonders kostengünstigen Bauform ist die Betätigungspartie der Dichtung einstückig mit der Dichtlippe verbunden. Die Bewegung der Betätigungspartie kann somit unmittelbar auf die Dichtlippe übertragen werden, um die erforderliche Schwenkbewegung hervorzurufen.

Es wäre prinzipiell 1 denkbar, die Betätigungspartie in mehrere einzelne Abschnitte zu unterteilen, die über den Umfang des Strömungskanals verteilt angeordnet sind. Insbesondere aus Gründen einer wesentlich einfacheren Herstellung empfiehlt sich allerdings eine Ausgestaltung der Betätigungspartie als in sich geschlossener Ringkörper.

Um den "Umschaltvorgang" zwischen der Ausgangsstellung und der Dichtstellung zu ermöglichen, kann die Dichtung so ausgeführt sein, daß sie sich mit einer rückseitigen Partie an einer quer zur Ansteckrichtung verlaufenden Stützfläche des Grundkörpers abstützt und an letzterer radial nach außen gleitet, wenn die Betätigungspartie durch die anstoßende Fluidleitung axial verlagert wird. Hier könnte also die Dichtung insgesamt schwimmend am Grundkörper angeordnet sein. Auch wird bei einer solchen Ausgestaltung regelmäßig der Anpreßdruck, mit dem die Dichtlippe in der Dichtstellung an den Außenumfang der Fluidleitung angepreßt wird, vom Ausmaß der axialen Verlagerung der Betätigungspartie abhängen, wobei die Betätigungspartie zweckmäßigerweise ständig von der Stirnfläche der Fluidleitung beaufschlagt wird.

Möglich wäre aber auch eine alternative Bauform, bei der sich die Dichtlippe bezüglich ihrer Ausgangsstellung und ihrer Dichtstellung bistabil verhält, indem sie insbesondere im Rahmen eines Schnappeffekts zwischen ihren beiden Stellungen umschaltet. Hier kann es genügen, die Betätigungspartie so weit axial zu verlagern, bis ein Totpunkt überschritten wird, ausgehend von dem sich die Dichtlippe mit einem schlagartigen bzw. schnappenden Verhalten an den Außenumfang der Fluidleitung anlegt, wobei die Betätigungspartie ihrerseits auch eine weitere Bewegung durchführen kann, die sie von der Stirnfläche der Fluidleitung entfernt. Dieses bistabile Verhalten wird vorzugsweise dadurch unterstützt, daß in die ansonsten zweckmäßigerweise einstückige Dichtung ein oder mehrere federelastische Einlegeteile eingebettet sind, die auf Grund ihrer Formgebung und ihrer Materialbeschaffenheit das gewünschte Verhalten gewährleisten oder begünstigen.

Bei dem vorerwähnten Schnapp- oder Klappmechanismus wird die Anpreßkraft, mit der die Dichtlippe gegen den Außenumfang der Fluidleitung gedrückt wird, zweckmäßigerweise allein durch die Geometrie und Beschaffenheit der Dichtung gewährleistet und ist unabhängig davon, ob die Fluidleitung nach Erhalt der Dichtstellung weiterhin an der Betätigungspartie anliegt.

Nachfolgend wird die Erfindung anhand der beiliegenden Zeichnung näher erläutert. In dieser zeigen:
- Fig. 1: ein erstes Ausführungsbeispiel der erfindungsgemäßen Anschlußvorrichtung in perspektivischer Darstellung und teilweise aufgebrochen,
- Fig. 2: den mit einer Dichtung der erfindungsgemäßen Art ausgestatteten vorderen Bereich der Anschlußvorrichtung aus Fig. 1 in vergrößerter Darstellung und teils - oberhalb der Mittellinie - im Längsschnitt, wobei in durchgezogenen Linien die Ausgangsstellung und in strichpunktierten Linien die Dichtstellung der Dichtung angedeutet ist, und
- Fig. 3: eine weitere Bauform der erfindungsgemäßen Anschlußvorrichtung in einer Längsschnittdarstellung vergleichbar der Fig. 2.

Die in der Zeichnung abgebildete Anschlußvorrichtung 1 verfügt über einen mehrteiligen Grundkörper 2, der von einem Strömungskanal 3 durchsetzt wird.

Das eine Ende des Strömungskanals 3 mündet beim Ausführungsbeispiel stirnseitig an einem rohrförmigen Anschlußstutzen 12 einer ersten Anschlußpartie 4 des Grundkörpers 2, an der sich eine strichpunktiert angedeutete Fluidleitung 5 lösbar festlegen läßt. Sein anderes Ende mündet an einer an einer anderen Seite des Grundkörpers 2 vorgesehenen zweiten Anschlußpartie 6, die beim Ausführungsbeispiel in einer Weise ausgeführt ist, die ein Befestigen an einer mit einem fluidischen Druckmedium zu versorgenden Bauteil ermöglicht. Die zweite Anschlußpartie 6 kann beispielsweise als Steckpartie oder als Gewindepartie ausgeführt sein.

Im speziellen Fall des Ausführungsbeispiels ist die Anschlußvorrichtung 1 als Schwenkvorrichtung ausgebildet, bei der der die erste Anschlußpartie 4 aufweisende erste Bestandteil 7 des Grundkörpers 2 um eine Achse 8 relativ zu dem die zweite Anschlußpartie 6 aufweisenden zweiten Bestandteil 9 verdrehbar ist, um eine bedarfsgemäße winkelmäßige Ausrichtung vorzunehmen. Der Strömungskanal hat in diesem Fall einen abgewinkelten Verlauf.

Wenigstens die erste Anschlußpartie 4 ist so ausgebildet, daß sich die Fluidleitung 5 im Rahmen eines Steckvorganges derart anschließen läßt, daß der in ihr verlaufende Leitungskanal 13 mit dem Strömungskanal 3 der Anschlußvorrichtung 1 kommuniziert. Bei angesteckter Fluidleitung 5 - dieser Zustand ist in der Zeichnung abgebildet - kann durch den Strömungskanal 3 hindurch ein Druckmedium zwischen der Fluidleitung 5 und dem an der zweiten Ahschlußpartie 6 angeschlossenen Bauteil überströmen. In diesem Zusammenhang sei darauf hingewiesen, daß durchaus mehrere oder sämtliche Anschlußpartien der Anschlußvorrichtung 1 in einer das Anstecken einer Fluidleitung 5 ermöglichenden Weise ausgestattet sein können. Im übrigen ist die Bauform der Anschlußvorrichtung nicht auf die abgebildete beschränkt, möglich wäre beispielsweise auch ein linearer Verlauf oder eine Ausgestaltung nach Art eines T-Stückes.

Um eine Fluidleitung 5, die regelmäßig flexible Eigenschaften aufweisen wird und insbesondere aus Kunststoffmaterial mit gummielastischen Eigenschaften besteht, an der ersten Anschlußpartie 4 des Grundkörpers 2 anzuschließen, wird sie mit einem Ende voraus mit einem linearen Steckvorgang an die erste Anschlußpartie 4 angesteckt. Beim Ausführungsbeispiel geschieht dies durch koaxiales Aufstecken auf den Außenumfang des Anschlußstutzens 12. Der Steckvorgang könnte allerdings auch wenigstens teilweise durch eine Drehbewegung der Fluidleitung 5 hervorgerufen werden.

Beim Ausführungsbeispiel ragt der Anschlußstutzen 12 über eine sich anschließende Basispartie 13 des Grundkörpers 2 vor. Der angesteckte Endabschnitt 14 der Fluidleitung 5 kommt daher mit seinem zylindrischen Außenumfang 15 vollständig außerhalb des Grundkörpers 2 zu liegen. Denkbar wäre allerdings auch eine Ausgestaltung, bei der der Anschlußstutzen 12 unter Belassung eines ringförmigen Zwischenraumes wenigstens über eine Teillänge von einem Abschnitt des Grundkörpers 2 umschlossen wird, so daß der angesteckte Endabschnitt 14 über zumindest einen Teil seiner Länge im Innern des Grundkörpers 2 zu liegen kommt.

Es ist beim Ausführungsbeispiel ferner vorgesehen, daß die Fluidleitung 5 im angesteckten Zustand allein durch den Anschlußstutzen 12 gehalten wird. Dieser verfügt am Außenumfang über wenigstens einen ringsrumlaufenden und zahnartig nach außen ragenden Haltevorsprung 16, der in den Innenumfang der aufgesteckten Fluidleitung 5 eindringt und letztere an einem Abziehen hindert. Denkbar wäre aber auch eine Ausgestaltung, bei der die Fluidleitung 5 auch oder ausschließlich an ihrem Außenumfang 15 durch geeignete Haltemittel der Anschlußvorrichtung 1 beaufschlagt und fixiert wird, wobei die Haltemittel beispielsweise von einer Spannzange gebildet sein könnten.

Werden Anschlußvorrichtungen der vorliegenden Art in Bereichen eingesetzt, in denen besondere Hygieneanforderungen bestehen - beispielsweise in der Lebensmittelindustrie oder in der Halbleiterfertigung -, ist es unerläßlich, die Außenoberfläche so zu gestalten, daß möglichst keine Zwischenräume, Ecken und Kanten vorliegen, in bzw. an denen sich Verunreinigungen ablagern können. Dabei ist insbesondere auch der Übergangsbereich zwischen dem Grundkörper 2 und einer angeschlossenen Fluidleitung 5 als verschmutzungsanfälliger kritischer Bereich zu betrachten, weshalb hier bei der gezeigten Anschlußvorrichtung 1 eine besonders vorteilhafte ringförmige Dichtung 17 zum Einsatz gelangt. Sie bewirkt einen wenigstens annähernd spaltfreien Übergang zwischen dem Außenumfang 15 der angesteckten Fluidleitung 5 und der Außenfläche 18 des Grundkörpers 2.

Die Dichtung 17 ist am Grundkörper 2 koaxial zum Strömungskanal 3 angeordnet und sitzt beim Ausführungsbeispiel auf der zylindrischen Außenfläche 22 des Anschlußstutzens 12, und zwar im eckförmigen übergangsbereich 23 zwischen dem Anschlußstutzen 12 und der diesbezüglich radial vorstehenden Basispartie 13.

Im einzelnen verfügt die beispielsgemäße Dichtung 17 über eine ausgehend von einem Zentralbereich 24 entgegen der durch einen Pfeil verdeutlichten Ansteckrichtung 25 der Fluidleitung nach vorne ragende ringförmige Dichtlippe 26. Sie umschließt den Anschlußstutzen 12 koaxial mit Radialabstand, so daß ein nach vorne entgegengesetzt zur Ansteckrichtung 25 offener ringförmiger Zwischenraum 27 verbleibt.

Des weiteren enthält die Dichtung 17 eine eine ringförmige Konfiguration aufweisende Betätigungspartie 28, die dem in Ansteckrichtung 25 weisenden rückwärtigen Endbereich der Dichtlippe 26 zugeordnet ist und ausgehend von dem Zentralbereich 24 unter Überbrückung des Zwischenraumes 27 radial nach innen ragt. Zweckmäßigerweise sind die Betätigungspartie 28 und die ringförmige Dichtlippe 26 einstückig miteinander verbunden.

Bei der Betätigungspartie 28 handelt es sich insbesondere um einen in sich geschlossenen Ringkörper, der in den Ansteckweg der anzuschließenden Fluidleitung 5 ragt. Er liegt also mit anderen Worten der in Ansteckrichtung 25 weisenden Stirnfläche 32 der im An- bzw. Aufstecken befindlichen Fluidleitung 5 axial gegenüber. Wird die Fluidleitung 5 auf den Anschlußstutzen 12 aufgesteckt, beaufschlagt sie mit ihrer Stirnfläche 32 bei Erreichen der Dichtung 17 die Betätigungspartie 28.

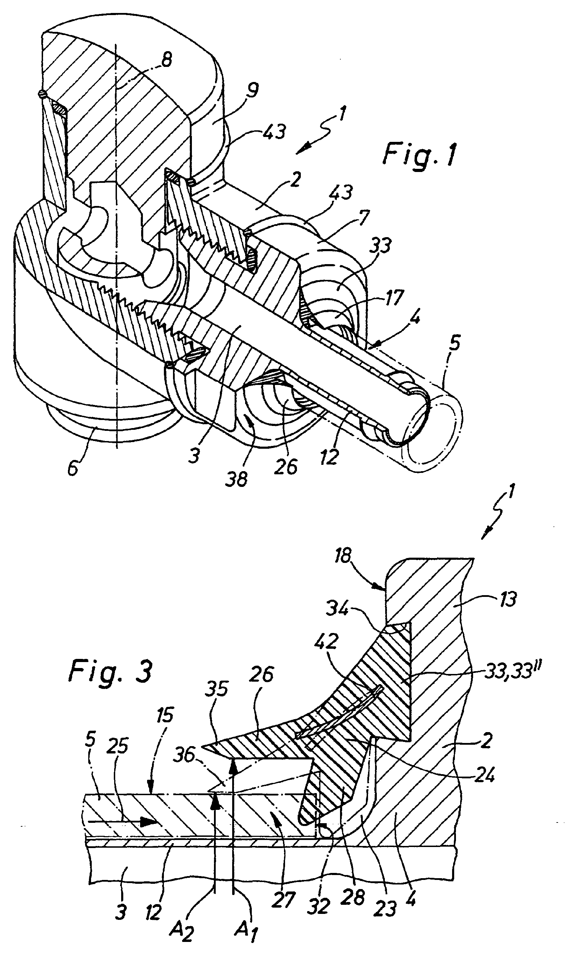

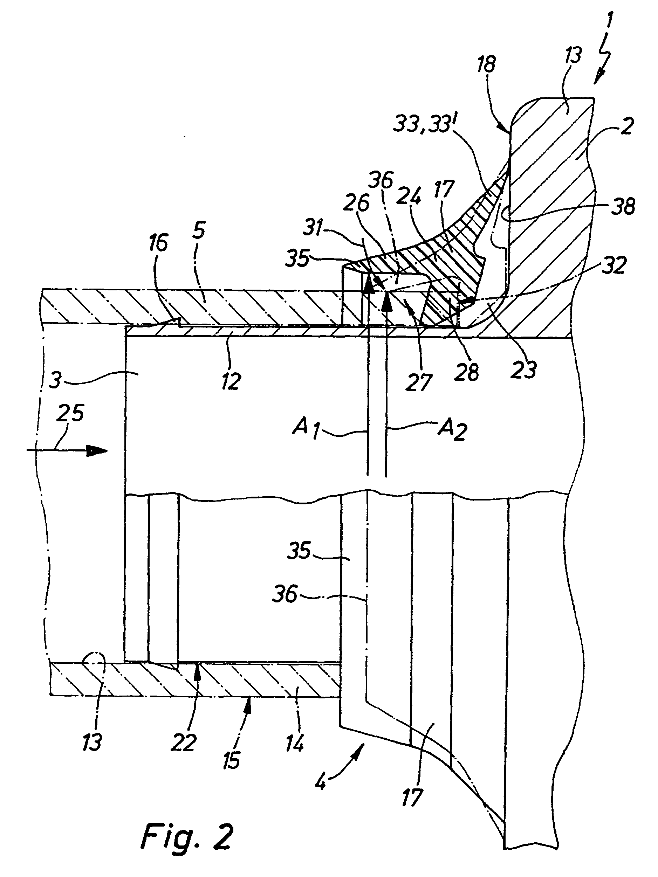

Schließlich verfügt die ringförmige Dichtung 17 noch über eine der Basispartie 13 zugewandte rückseitige ringförmige, zur Dichtlippe 26 koaxiale Dichtpartie 33, die mit der Basispartie 13 des Grundkörpers 2 zusammenarbeitet. Sie ist beim Ausführungsbeispiel der Fig. 1 und 2 als mit Berührkontakt an der zugewandten Außenfläche der Basispartie 13 anliegendes lippenartiges Dichtelement 33' ausgebildet. Beim Ausführungsbeispiel der Fig. 3 ist sie von einer Haltepartie 33" gebildet, über die die Dichtung 17 an der Basispartie 13 befestigt ist, beispielsweise durch Eingreifen in eine an der Außenfläche 18 der Basispartie 13 vorgesehene Ringnut 34.

Bei nicht angesteckter Fluidleitung 5 nimmt die ringförmige Dichtlippe 26 die in der Zeichnung mit durchgezogenen Linien dargestellte Ausgangsstellung 35 ein. Sie umgrenzt hierbei einen größeren Querschnitt A₁, welcher so auf den Außenquerschnitt der anzuschließenden Fluidleitung 5 abgestimmt ist, daß sich letztere beim Aufstecken auf den Anschlußstutzen 12 problemlos von der offenen Vorderseite her in den ringförmigen Zwischenraum 27 einführen läßt. Beim Ausführungsbeispiel sind die Abmessungen so gewählt, daß der von der Dichtlippe 26 in der Ausgangsstellung umgrenzte Querschnitt A₁ um einen gewissen Betrag größer ist als der Außenquerschnitt der Fluidleitung 5, so daß die Dichtlippe 26 dem Außenumfang 15 der Fluidleitung 5 beabstandet ist.

Wird nun die Fluidleitung 5 weiter in Ansteckrichtung 25 verlagert, beaufschlagt sie schließlich mit ihrer Stirnfläche 32 die Betätigungspartie 28, welche sie dabei axial in Ansteckrichtung 25 verlagert. Dies ruft ein durch Pfeil 31 angedeutetes konzentrisches Verschwenken zumindest des freien Endbereiches der ringförmigen Dichtlippe 26 nach radial innen hervor, bis die Dichtlippe 26 unter Umgrenzung eines nurmehr geringeren Querschnittes A₂ unter Einnahme einer in der Zeichnung strichpunktiert angedeuteten Dichtstellung 36 unter Vorspannung ringsum am Außenumfang 15 der angesteckten Fluidleitung 5 zur Anlage gelangt. Da die Dichtpartie 33 gleichzeitig mit der Basispartie 13 kooperiert, ergibt sich somit eine sehr gute Abdichtung bzw. Abdeckung des zwischen der Stirnfläche 32 der Fluidleitung 5 und der gegenüberliegenden Fläche der Basispartie 13 vorhandenen Zwischenraumes, wodurch einem Ablagern von Schmutz oder sonstigen Fremdkörpern entgegengewirkt ist.

Da sich die Dichtlippe 26 erst dann an den Außenumfang 15 der Fluidleitung 5 anlegt, wenn letztere bereits in den Zwischenraum 27 eingeführt ist, ergibt sich eine problemlose Handhabung ohne Gefahr eines eventuellen Umstülpens der Dichtlippe 26.

Beim Ausführungsbeispiel der Fig. 1 und 2 ist die Dichtlippe durch die besondere Gestaltung der Dichtung 17 so in die Ausgangsstellung 35 vorgespannt, daß sie in diese beim Entfernen der Fluidleitung 5 selbsttätig zurückkehrt. Das anschließende neuerliche Anschließen einer Fluidleitung kann daher unverzüglich und ohne besondere fremdbetätigte Manipulationen an der Dichtung 17 erfolgen. Es ist hier auch insbesondere vorgesehen, daß die Dichtlippe 26 ausschließlich durch Beaufschlagung der Betätigungspartie 28 seitens der eingesteckten Fluidleitung 5 in der Dichtstellung 36 gehalten wird. Vorbehaltlich einer Begrenzung des Verlagerungsweges der Betätigungspartie 28 durch die Basispartie 13 hängt somit die Anpreßkraft der Dichtlippe 26 von der durch die Fluidleitung 5 hervorgerufenen Verlagerungsstrecke der Betätigungspartie 28 ab.

Beim Ausführungsbeispiel der Fig. 1 und 2 ist die Anordnung so getroffen, daß das Nach-innen-Schwenken der Dichtlippe 26 mit einem radialen Nach-außen-Gleiten des lippenartigen Dichtelements 33' an der Basispartie 13 einhergeht. Hierzu ist ein entgegen der Ansteckrichtung 25 weisender Abschnitt der Außenfläche 18 der Basispartie 13 als ringförmige Stützfläche 38 ausgebildet, an der sich die Dichtung 17 mit einer rückseitigen Partie und insbesondere mit dem lippenartigen Dichtelement 33' abstützen kann, um bei axialer Beaufschlagung durch die Fluidleitung 5 nach radial außen abzugleiten. Die Dichtung 17 wird dabei um ihren Zentralbereich 24 sozusagen leicht verdreht, so daß die Dichtlippe 26 eine sich aus einer Bewegung nach radial innen und zugleich nach axial rückwärts zusammensetzende Schwenkbewegung ausführt. Begrenzt wird der Vorgang durch ein Anliegen der Betätigungspartie 28 an der Basispartie 13.

Beim Ausführungsbeispiel der Fig. 3 ändert die Dichtpartie 33 beim "Umschalten" der Dichtlippe 26 ihre Position nicht. Das "Umschalten" ist hier im wesentlichen durch eine gemeinsame Schwenkbewegung der Betätigungspartie 28 und der mit dieser in Verbindung stehenden Dichtlippe 26 um den Zentralbereich 24 gekennzeichnet.

Das Ausführungsbeispiel der Fig. 3 zeichnet sich überdies durch ein bistabiles Umschaltverhalten der Dichtlippe 26 aus, indem sie durch einen Schnappeffekt zwischen der Ausgangsstellung 35 und der Dichtstellung 36 übergeführt wird, wobei es sich bei beiden Stellungen um stabile Stellungen handeln kann, die unabhängig vom Vorhandensein der Fluidleitung 5 beibehalten werden, wenn sie erst einmal vorliegen.

Das umschnappende bzw. umklappende Verhalten kann beispielsweise dadurch begünstigt oder gewährleistet werden, daß in die Dichtung 17 ein federelastisches Einlegeteil 42 integriert ist. Auch mehrere solche Einlegeteile wären denkbar. Beim Ausführungsbeispiel kommt ein ringförmiges Einlegeteil 42 zur Anwendung, das ein- oder mehrfach geschlitzt sein kann und das bandartig dünn ausgeführt ist, wobei es über zwei stabile Zustände verfügt, in denen es, im Querschnitt gesehen, mit unterschiedlicher Wölbung gekrümmt ist. Beim Anstecken einer Fluidleitung 5 ist der elastische Widerstand des Einlegeteils 42 zu überwinden, bis es in die andere stabile Lage umklappt und dabei die Dichtlippe 26 fest gegen den Außenumfang 15 der Fluidleitung 5 andrückt. Auf diese Weise ist ein fester Kontakt auch dann gewährleistet, wenn sich die Fluidleitung 5 bedingt durch äußere Einflüsse im Betrieb der Anschlußvorrichtung ungewollt ein Stück weit entgegen der Anstreckrichtung 25 verlagern sollte.

Während beim Ausführungsbeispiel der Fig. 3 die Dichtung 17 über die Haltepartie 33' unverlierbar am Grundkörper 2 festgelegt ist, erfolgt beim Ausführungsbeispiel der Fig. 1 und 2 die Fixierung zweckmäßigerweise dadurch, daß die Betätigungspartie 28 den Anschlußstutzen 12 mit radialer Vorspannung umschließt und dadurch kraftschlüssig gehalten ist. Zudem kann der Haltevorsprung 16 als Anschlagmittel wirken, das im Zusammenwirken mit der Betätigungspartie 28 ein Verlieren der Dichtung 17 verhindert.

Aus der Fig. 1 ist schließlich noch ersichtlich, daß im Fügebereich zwischen einzelnen Teilen des Grundkörpers 2 Abdeckelemente 43 angeordnet sein können, die eventuell vorhandene Spalte verschließen. Bei den vorhandenen ringförmigen Fügebereichen sind ringförmige Abdeckelemente 43 in konzentrischer Anordnung vorgesehen, die zwischen den jeweils zusammengefügten Teilen fixiert sind und beispielsweise aus Kunststoffmaterial oder Metall bestehen können. Sie werden zweckmäßigerweise beim Zusammenfügen der Grundkörperteile zwischengefügt.

## Patentansprüche

1. Anschlussvorrichtung für Fluidleitungen, mit einem einen Strömungskanal (3) aufweisenden Grundkörper (2), mit dem durch einen Steckvorgang eine Fluidleitung (5) verbindbar ist und der eine koaxial zu dem Strömungskanal (3) angeordnete ringförmige Dichtung (17) trägt, die mit einer ringförmigen Dichtlippe (26) am Außenumfang (15) der angesteckten Fluidleitung (5) anliegen kann, um einem Eindringen von Verunreinigungen in zwischen der Fluidleitung (5) und dem Grundkörper (2) vorhandenen Zwischenräumen entgegenzuwirken, **dadurch gekennzeichnet, dass** die Dichtung (17) eine radial nach innen in den Ansteckweg der anzuschließenden Fluidleitung (5) ragende, eine ringförmige Konfiguration aufweisende Betätigungspartie (28) besitzt, die beim Anstecken einer Fluidleitung (5) durch deren Stirnfläche (32) beaufschlagbar und axial verlagerbar ist, wobei sie ein Verschwenken der Dichtlippe (26) aus einer einen größeren Querschnitt umgrenzenden Ausgangsstellung in eine unter Umgrenzung eines geringeren Querschnitts am Außenumfang (15) der Fluidleitung (5) anliegende Dichtstellung hervorruft, und die auch bei fertig angesteckter Fluidleitung (5) deren Stirnfläche (32) axial vorgelagert ist.

2. Anschlußvorrichtung nach Anspruch 1, **dadurch gekennzeichnet, daß** die Betätigungspartie (28) einstückig mit der Dichtlippe (26) verbunden ist.

3. Anschlußvorrichtung nach Anspruch 1 oder 2, **dadurch gekennzeichnet, daß** die Betätigungspartie (28) dem in Ansteckrichtung (25) weisenden rückwärtigen Endbereich der Dichtlippe (26) zugeordnet ist.

4. Anschlußvorrichtung nach einem der Ansprüche 1 bis 3, **dadurch gekennzeichnet, daß** die Betätigungspartie (28) als in sich geschlossener Ringkörper ausgebildet ist.

5. Anschlußvorrichtung nach einem der Ansprüche 1 bis 4, **dadurch gekennzeichnet, daß** sich die Dichtung (17) beim übergang zwischen der Ausgangsstellung und der Dichtstellung mit einer rückseitigen Partie (33) an einer quer zur Ansteckrichtung (25) verlaufenden Stützfläche (38) des Grundkörpers (2) abstützt und an dieser nach radial außen gleitet.

6. Anschlußvorrichtung nach Anspruch 5, **dadurch gekennzeichnet, daß** die rückseitige Partie (33) wenigstens teilweise als dichtend mit dem Grundkörper (2) zusammenarbeitendes ringförmiges und insbesondere lippenartiges Dichtelement (33') ausgeführt ist.

7. Anschlußvorrichtung nach einem der Ansprüche 1 bis 6, **dadurch gekennzeichnet, daß** die Dichtlippe (26) so in die Ausgangsstellung vorgespannt ist, daß sie beim Entfernen einer zuvor angesteckten Fluidleitung (5) selbsttätig in die Ausgangsstellung zurückschwenkt.

8. Anschlußvorrichtung nach einem der Ansprüche 1 bis 7, **dadurch gekennzeichnet, daß** die Dichtlippe (26) ausschließlich durch Beaufschlagung der Betätigungspartie (28) seitens einer eingesteckten Fluidleitung (5) in der Dichtstellung gehalten wird.

9. Anschlußvorrichtung nach einem der Ansprüche 1 bis 8, **dadurch gekennzeichnet, daß** sich die Dichtlippe (26) bezüglich ihrer Ausgangsstellung und ihrer Dichtstellung bistabil verhält.

10. Anschlußvorrichtung nach einem der Ansprüche 1 bis 9, **gekennzeichnet durch** einen Schnappeffekt oder Klappeffekt beim übergang zwischen der Ausgangsstellung und der Dichtstellung.

11. Anschlußvorrichtung nach Anspruch 9 oder 10, **dadurch gekennzeichnet, daß** die Dichtlippe (26) in der Dichtstellung mit allein aus der Gestaltung der Dichtung (17) resultierender Vorspannung am Außenumfang (15) der angesteckten Fluidleitung (5) anliegen kann.

12. Anschlußvorrichtung nach einem der Ansprüche 1 bis 11, **dadurch gekennzeichnet, daß** die Dichtung (17) so angeordnet ist, daß die Dichtlippe (26) in der Dichtstellung an einem außerhalb des Grundkörpers (2) liegenden Abschnitt (14) der angesteckten Fluidleitung (5) anliegt.

13. Anschlußvorrichtung nach einem der Ansprüche 1 bis 12, **dadurch gekennzeichnet, daß** in die Dichtung (17) mindestens ein insbesondere federelastisches Einlegeteil wenigstens teilweise integriert ist.

## Claims

1. Connection device for fluid lines, with a body (2) with a flow passage (3), to which a fluid line (5) may be connected by plugging-in and which has an annular seal (17) arranged coaxially to the flow passage (3) and which can fit up with an annular seal lip (26) against the outer periphery (15) of the attached fluid line (5) so as to prevent the penetration of impurities into the interspaces between the fluid line (5) and the body (2), **characterised in that** the seal (17) has an actuating section (28) with an annular configuration, which extends radially inwards into the attachment path of the fluid line (5) to be connected, and which during attachment of a fluid line (5) may be acted upon and axially displaced by its end face (32), wherein it generates a swivelling of the seal lip (26) from an original position defining a larger cross-section into a sealing position in contact with the outer periphery (15) of the fluid line (5) and defining a smaller cross-section, and which is also axially in front of the end face (32) of the fluid line (5) when the latter is fully attached.

2. Connection device according to claim 1, **characterised in that** the actuating section (28) is connected integrally to the seal lip (26).

3. Connection device according to claim 1 or 2, **characterised in that** the actuating section (28) is assigned to the rear end section of the seal lip (26) facing in the direction of attachment (25).

4. Connection device according to any of claims 1 to 3, **characterised in that** the actuating section (28) is in the form of a closed annular body.

5. Connection device according to any of claims 1 to 4 **characterised in that**, in the transition from the original position to the sealing position, the seal (17) rests with a rear section (33) on a support surface (38) of the body (2) running at right-angles to the direction of attachment (25), and slides radially outwards on this support surface.

6. Connection device according to claim 5, **characterised in that** the rear section (33) is at least partly in the form of an annular and in particular lip-shaped sealing element (33') which cooperates in sealing with the body (2).

7. Connection device according to any of claims 1 to 6, **characterised in that** the seal lip (26) is biased in the original position so that, on removal of a previously attached fluid line (5), it swings back automatically into the original position.

8. Connection device according to any of claims 1 to 7, **characterised in that** the seal lip (26) is held in the sealing position solely by the pressure applied to the actuating section (28) by an inserted fluid line (5).

9. Connection device according to any of claims 1 to 8, **characterised in that** the seal lip (26) is bistable in respect of its original position and its sealing position.

10. Connection device according to a any of claims 1 to 9, **characterised by** a snap-on or catch effect in the transition from the original position to the sealing position.

11. Connection device according to claim 9 or 10, **characterised in that** the seal lip (26) is able in the sealing position to fit up against the outer periphery (15) of the attached fluid line (5) due solely to the bias resulting from the shape of the seal (17).

12. Connection device according to any of claims 1 to 11, **characterised in that** the seal (17) is so fitted that, in the sealing position, the seal lip (26) fits up against a section (14) of the attached fluid line (5) which lies outside the body (2).

13. Connection device according to any of claims 1 to 12, **characterised in that** one or more insert parts, in particular spring-elastic, are at least partly integrated into the seal (17).

## Revendications

1. Dispositif de raccordement pour des conduites de fluide, avec un corps de base (2) présentant un canal d'écoulement (3), auquel une conduite de fluide (5) peut être reliée par une opération d'enfichage et qui porte un joint annulaire (17) placé de façon coaxiale au canal d'écoulement (3), joint qui peut s'appuyer par une lèvre d'étanchéité annulaire (26) contre la circonférence extérieure (15) de la conduite de fluide enfichée (5) afin de s'opposer à une pénétration d'impuretés dans des interstices présents entre la conduite de fluide (5) et le corps de base (2), **caractérisé en ce que** le joint (17) possède une partie de manoeuvre (28) présentant une configuration annulaire et formant saillie radialement vers l'intérieur dans la course d'enfichage de la conduite de fluide (5) à raccorder, partie qui, lors de l'enfichage d'une conduite de fluide (5), peut être sollicitée par la surface frontale (32) de celle-ci et peut être déplacée axialement, en provoquant un pivotement de la lèvre d'étanchéité (26) d'une position de départ entourant une section plus grande à une position d'étanchéité en appui sur la circonférence extérieure (15) de la conduite de fluide (5) en formant une section plus faible, et qui, même une fois la conduite de fluide (5) enfichée, se trouve axialement devant la surface frontale (32) de celle-ci.

2. Dispositif de raccordement selon la revendication 1, **caractérisé en ce que** la partie de manoeuvre (28) est reliée d'un seul tenant à la lèvre d'étanchéité (26).

3. Dispositif de raccordement selon la revendication 1 ou 2, **caractérisé en ce que** la partie d'actionnement (28) est associée à la zone d'extrémité arrière de la lèvre d'étanchéité (26) tournée dans la direction d'enfichage (25).

4. Dispositif de raccordement selon l'une des revendications 1 à 3, **caractérisé en ce que** la partie d'actionnement (28) est conformée en corps annulaire fermé sur lui-même.

5. Dispositif de raccordement selon l'une des revendications 1 à 4, **caractérisé en ce que**, lors du passage de la position de départ à la position d'étanchéité, le joint (17) s'appuie par une partie arrière (33) contre une surface d'appui (38) du corps de base (2) s'étendant transversalement à la direction d'enfichage (25) et glisse vers l'extérieur radialement sur celle-ci.

6. Dispositif de raccordement selon la revendication 5, **caractérisé en ce que** la partie arrière (33) est réalisée au moins partiellement en élément d'étanchéité (33') annulaire et en particulier en forme de lèvre coopérant de manière étanche avec le corps de base (2).

7. Dispositif de raccordement selon l'une des revendications 1 à 6, **caractérisé en ce que** la lèvre d'étanchéité (26) est précontrainte dans la position de départ de telle manière que, lors du retrait d'une conduite de fluide (5) précédemment enfichée, elle revient automatiquement dans la position de départ.

8. Dispositif de raccordement selon l'une des revendications 1 à 8, **caractérisé en ce que** la lèvre d'étanchéité (26) est tenue exclusivement par sollicitation de la partie de manoeuvre (28) de la part d'une conduite de fluide (5) enfichée dans la position d'étanchéité.

9. Dispositif de raccordement selon l'une des revendications 1 à 8, **caractérisé en ce que** la lèvre d'étanchéité (26) se comporte de manière bistable du point de vue de sa position de départ et de sa position d'étanchéité.

10. Dispositif de raccordement selon l'une des revendications 1 à 9, **caractérisé par** un effet de crantage ou de fermeture lors du passage entre la position de départ et la position d'étanchéité.

11. Dispositif de raccordement selon la revendication 9 ou 10, **caractérisé en ce que** la lèvre d'étanchéité (26) peut s'appuyer avec la seule précontrainte résultant de la configuration du joint (17) contre la circonférence extérieure (15) de la conduite de fluide (5) enfichée.

12. Dispositif de raccordement selon l'une des revendications 1 à 11, **caractérisé en ce que** le joint (17) est disposé de telle manière que la lèvre d'étanchéité (26) s'appuie dans la position d'étanchéité contre une section (14) de la conduite de fluide (5) enfichée située à l'extérieur du corps de base (2).

13. Dispositif de raccordement selon l'une des revendications 1 à 12, **caractérisé en ce qu'**au moins un insert en particulier élastique est au moins partiellement intégré dans le joint (17).
